# EUROPEAN PATENT SPECIFICATION

(11) **EP 1 219 125 B1**
(45) Date of publication and mention of the grant of the patent: **09.07.2008**
(21) Application number: 00960736.7
(22) Date of filing: 21.09.2000
(51) Int. Cl.: H04Q 7/22

(54) **TRANSMISSION OF A SHORT MESSAGE IN A TELECOMMUNICATION SYSTEM**
ÜBERTRAGUNG EINER KURZNACHRICHT IN EINEM TELEKOMUNIKATIONSSYSTEM
TRANSMISSION D'UN MESSAGE COURT DANS UN SYSTEME DE TELECOMMUNICATION

(30) Priority: 21.09.1999 FI 992019
(43) Date of publication of application: 03.07.2002
(73) Proprietor: TeliaSonera Finland Oyj, 00510 Helsinki (FI)
(72) Inventor: ALA-LUUKKO, Sami, FIN-00200 Helsinki (FI); JULKUNEN, Mika, FIN-00750 Helsinki (FI)
(74) Representative: Simmelvuo, Markku Kalevi
(86) International application number: PCT/FI2000/000808
(87) International publication number: WO 2001/022751

(56) References cited:
- EP-A2- 0 851 696
- WO-A1-98/02007
- WO-A2-98/32300

## Description

### FIELD OF THE INVENTION

The present invention relates to telecommunications technology. In particular, the present invention relates to a method and system for transmitting a short message in a telecommunication system comprising a telecommunication network, a location data register, a database for storing subscriber data, a gateway that connects said location data register and said database to said telecommunication network. In the method, a short message is created, the short message is sent to the telecommunication network, and the short message is directed via the telecommunication network to the gateway.

### BACKGROUND OF THE INVENTION

Mobile communication networks such as, e.g. GSM networks (GSM, Global System for Mobile communications) have become very popular in a big part of the world. The advantage of mobile communication networks as compared to traditional fixed telephone networks is the overhead interface enabling a wide-ranging mobility.

In future, when talking about a mobile communication network it is advantageously used to mean a digital mobile communication network, e.g. a GSM network. Since the introduction of the digital mobile networks, a short message service (SMS, Short Message Service) has been a part of the services provided. The short message service function allows the mobile subscriber to send text messages that contain up to 160 characters from his or her terminal device, e.g. to another subscriber who has got a terminal device capable of receiving short messages at his or her disposal.

At present, the transmission system of short messages does not enable short message forwarding to another subscriber number. By this is meant a feature that in the case of a regular call would be called as call transfer. Short message forwarding is not possible at the moment because it is not possible to receive the short message forwarding information (the forwarded-to number) from the home location register (HLR) by means of signaling meant for short messages (SendRoutingInfoForSM message).

WO 98/02007 discloses a method and apparatus for transferring a short message between an originating mobile station and the short message service center permanently associated with the destination mobile station is disclosed. The originating mobile station sends the short message (including the address of the destination mobile station) to the mobile network over an air interface. The mobile network transfers the short message internally between switching nodes. One of the switching nodes interrogates a subscriber database, and passes the mobile station's address to the database, as well as information showing that this is a short message submitted from a mobile station. The database checks to determine if the destination mobile station is short message service capable. If not, the short message is terminated. Otherwise, the database returns the address of the short message service center permanently associated with the destination mobile station. The short message is transferred through the mobile network to that short message service center.

### OBJECTIVE OF THE INVENTION

The objective of the invention is to eliminate or at least significantly alleviate the problems mentioned above. One specific objective of the invention is to disclose a new kind of method and system that enable the forwarding of a short message sent to a mobile communication network, e.g. to another subscriber number, which is preferably a MSISDN number (MSISDN, Mobile Station ISDN Number).

As for the features characteristic of the invention, reference is made to them in the claims.

### BRIEF DESCRIPTION OF THE INVENTION

The system in accordance with the invention relates to transmission of short messages in a telecommunication system. In the invention, the new functionality relating to forwarding of a short message is implemented by the gateway. The gateway contains such progressive features that the standard components of a mobile communication network do not include. As concerns the functionality, essential is the fact that the gateway enables signaling between different network components without the actual network components having the ability to communicate with each other.

The telecommunication system comprises a telecommunication network, a location data register, a database for saving subscriber data, a gateway which connects said location data register and said database to said telecommunication network.

In the method, a short message is created, and the short message is sent to the telecommunication network. The short message is directed via the telecommunication network to the gateway. In accordance with the invention, a database is maintained in which those subscribers are entered who have activated the short message forwarding service. From the database it is checked whether the receiver of the short message has activated the short message forwarding service. The checking is advantageously done by the gateway. A short message forwarding service may mean the same as call forwarding unconditional (CFU). This means that an activated unconditional call forwarding concerns short messages as well. The forwarding service is activated, if the user has set it, e.g. on his terminal device. If the short message forwarding service has been activated, a routing information query is made that is addressed to the location data register. The routing information query is advantageously a SendRoutingInfo message.

It is to be noted that in a normal transmission situation of a short message the short message service centre sends the location data register, e.g. a SendRoutingInfoForSM message to serve as the routing information query. In response to the routing information query made by the short message service centre not a subscriber number as indicated by the message forwarding service is received, although the call forwarding unconditional service would have been activated. Because of this fact, the SendRoutingInfo message is used as the routing information query. If the subscriber has activated the short message forwarding service, then in response to the aforementioned routing information query, a forwarded-to number as shown by the forwarding service is returned. When the routing information has been found out, the short message is routed based on the routing information received from the location data register to the relevant subscriber.

The subscriber sets the short message forwarding service using, e.g. a call forwarding unconditional service. According to this, the subscriber dials, e.g. the following character combination: **21*area code; telephone number# (handset key). This activates the forwarding service, and the activating data of the CFU is entered in the home location register.

The gateway plays an essential role in the SMS forwarding in implementing the signaling required for the transfer and the logic in between the network components. In addition, the gateway is responsible for eliminating incompatibility problems in between different network interfaces.

The gateway supports different protocols, which enables signaling between different network elements so that the actual network elements would be able to communicate with each other. Further, by means of the gateway it is possible to implement signaling which differs from the normal standard signaling. An example of this signaling is the SendRoutingInfo message in conjunction with the short message forwarding.

In an embodiment of the invention, the short message is routed normally further to the original receiver of the short message, if the short message forwarding service is not activated.

The system in accordance with the present invention comprises data records in which those subscribers are entered who have activated the short message forwarding service, and a checker for checking the activity of the short message forwarding service from the database. Further the system comprises a query maker for making the routing information query addressed to the location data register, and a transmitter for routing the short message based on the data given by the routing information query.

In one embodiment of the invention, the database is an internal database of the gateway. In another embodiment, the database is an external database attached to the gateway.

In an embodiment of the invention, the database is a location data register or an external or internal database attached to the location data register.

In an embodiment of the invention, the telecommunication network is a mobile communication network, e.g. a GSM network.

In an embodiment of the invention, the location data register is the home location register of the mobile communication network.

In an embodiment of the invention, the gateway is the short message service centre (SMSC) of the mobile communication network.

Thanks to the present invention, it is possible to direct short messages to another subscriber number, which is preferably a MSISDN number. The invention makes it possible to implement a same kind of functionality as the call transfer in a telephone network.

### BRIEF DESCRIPTION OF THE DRAWINGS

In the following section, the invention will be described in detail by way of examples of its embodiments, in which
Fig. 1 represents an advantageous system in accordance with the invention.
Fig. 2 represents an advantageous example of the function of the system in accordance with the invention.
Fig. 3 represents an advantageous system that implements the forwarding of a short message,
Fig. 4 represents an advantageous system that implements the forwarding of a short message,
Fig. 5 represents an advantageous system that implements the forwarding of a short message, and
Fig. 6 represents an advantageous signaling diagram describing the function of the present invention.

### DETAILED DESCRIPTION OF THE INVENTION

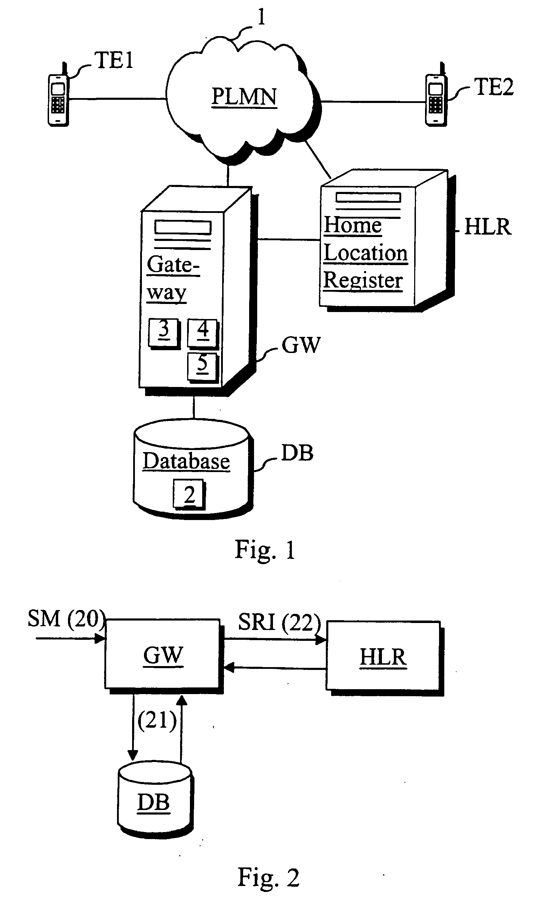

The system as illustrated in figure 1 comprises terminal devices TE1 and TE2 as well as a telecommunication network 1. In this example, the telecommunication network is a mobile communication network (PLMN, Public Land Mobile Network). The terminal devices are preferably mobile stations. The mobile stations have been connected to the public land mobile network, e.g. via a radio interface. The system also comprises a gateway GW, a home location register HLR, and a database DB. Both the gateway and the home location register have been connected to the public land mobile network. In addition, the gateway has been connected to the home location register and the database.

The gateway GW comprises a checker 3 for checking the activity data of the forwarding service from the database DB. By means of the query maker 4 a routing information query is made that is addressed to the location data register HLR. By means of the transmitter 5 the short message is routed based on the data given by the routing information query.

The database DB comprises data records 2 in which those subscribers have been entered who have activated the short message forwarding service.

The checker 3, query maker 4, and transmitter 5 are preferably implemented by means of program blocks with the aid of the computer.

Fig. 2 is an advantageous example illustrating the function in accordance with the invention. The gateway GW means in this context a server computer on which a piece of software has been made that supports the GSM system and the signaling protocols required in it. The gateway GW may comprise, e.g. the following components and functions:
- the databases required
- computer components
- signaling components, e.g. SS7, Signaling System number 7)
- the software required (for instance, the service creation, performing and management environment, description of services)
- signaling protocols (INAP, MAP, TCAP, TCP/IP; INAP, Intelligent Network Application Part; MAP, Mobile Application Part; TCAP, Transaction Capabilities Application part; TCP/IP, Transmission Control Protocol, Internet Protocol)

In this example, the gateway GW has been connected to the public land mobile network, or it is a part of the public land mobile network. The gateway receives the short message from a component of the public land mobile network, arrow 20. The component is, e.g. a short message service centre or a mobile services switching centre (MSC). The gateway checks either from an external or internal database DB whether the subscriber B has activated the SMS forwarding service, double arrow 21. If the B subscriber has activated the forwarding service, the gateway requests the home location register HLR for the routing information by means of a MAP SendRoutingInfo message, arrow 22. If the B subscriber has activated the forwarding service, the home location register returns the forwarded-to number to the gateway instead of the roaming number. The forwarded-to number is the number where the B subscriber has set his or her short messages should be forwarded to.

If the short message forwarding service has not been activated, the short message is sent normally further on to the subscriber number of the original B subscriber. Let it be noted that the receipt and forwarding of a short message may happen by means of a MAP protocol or some other protocol suitable for a short message transmission. The question may not even be about an interface between the network components, instead it may be a question about a primitive.

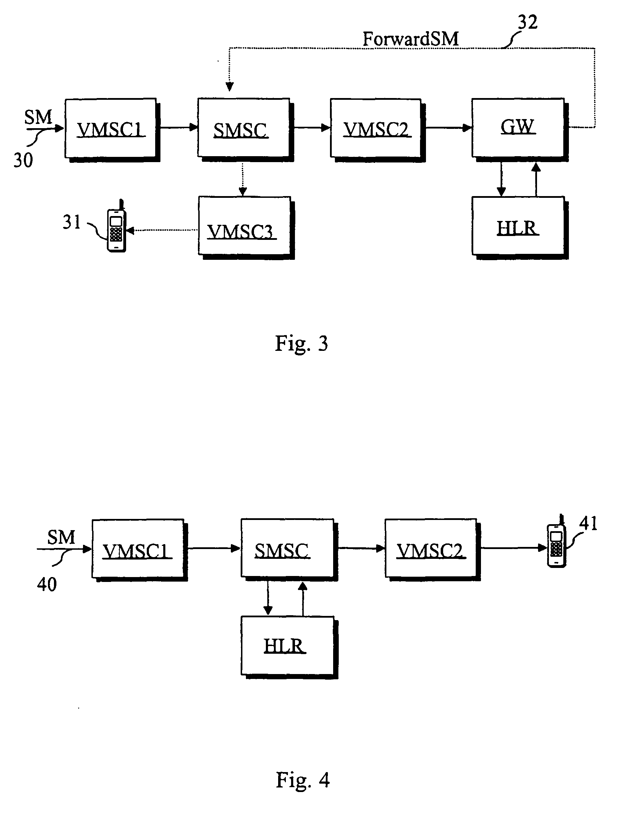

Fig. 3 is an advantageous example illustrating a system that implements the forwarding of a short message. In this example, the short message comes, as shown by arrow 30, to VMSC1 (VMSC, visitor mobile services switching centre). From it the short message is forwarded further on to the short message service centre SMSC. In this example, the short message service centre is provided with a feature that enables a triggering function for that subscriber data that has an activated SMS forwarding service. The triggering function is active only in the MT short messages (MT, Mobile Terminated). In other words, if the original subscriber B associated with the short message has activated the SMS forwarding service, the short message is directed further on to the visitor mobile services switching centre VMSC2. The visitor mobile services switching centre VMSC2 directs the short message further to the gateway GW. If the MSISDN number of the B subscriber associated with the short message is not included in the numbers to be trigged, the short message is transmitted further on normally without sending it at all to the gateway. In that case, the short message service centre finds out the routing information of the short message and sends the short message further on to the visitor mobile services switching centre VMSC3.

When the short message comes to the gateway GW, the gateway requests the home location register HLR for the routing information by means of a MAP SendRoutingInfo message. The home location register returns the forwarded-to number to the gateway. The forwarded-to number is the number or other piece of routing information where the B subscriber has set his or her short messages should to be forwarded to.

As shown by arrow 32, the gateway transmits the short message back to the short message service centre SMSC. Now as the receiver of the short message appears a new MSISDN number differing from the original B subscriber number. The short message is directed further on to the visitor mobile services switching centre VMSC3, which takes care of sending the short message to the mobile station 31. The advantage of the solution described above is that the traffic going to the gateway is smaller than in a situation where all the short message traffic would be directed via gateway.

Fig. 4 describes an advantageous example of a system that implements the forwarding of a short message. In this example, the database associated with the forwarding of a short message as shown by figure 1 is located in the short message service centre SMSC because the short message service centre does not usually support interfaces to external databases. Further in this example, the functionality required by the forwarding of a short message is included in the short message service centre. A MT short message arrived in the public land mobile network, arrow 40, is directed via the visitor mobile services switching centre VMSC1 to the short message service centre. In this example the short message service centre has to be able to handle subscriber-specific data and perform relatively complicated analyses.

The short message service centre SMSC finds out from the internal database whether the receiver of the short message has activated the short message forwarding service. The short message service centre sends the home location register HLR a MAP SendRoutingInfo message and receives in response from the home location register the relevant routing information. The message to be directed to the new B subscriber is sent further on to the visitor mobile services switching centre VMSC2, which takes care of sending the short message to the mobile station 41. The solution as described above has the advantage that it saves signaling capacity. This solution, however, requires adding of new features to the existing short message service centres.

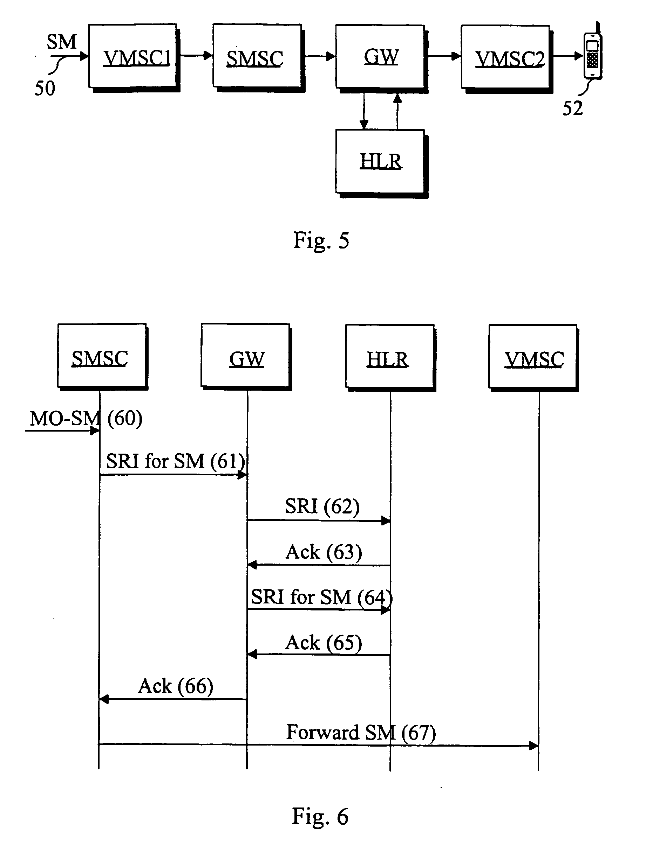

Fig. 5 represents an advantageous example of a system that implements the forwarding of a short message. In this example, the functionality associated with the short message forwarding has been implemented in the gateway GW. In the system as illustrated in figure 5, the forwarding of a short message may happen in two different ways.

In the first case, all the MT short messages are routed to the gateway GW via the visitor mobile services switching centre VMSC1 and the short message service centre SMSC. The gateway finds out from the internal or external database whether the subscriber has activated the short message forwarding service. If the service has been activated, the gateway sends the home location register HLR a SendRoutingInfo message. Based on the routing information received from the home location register the gateway directs the short message further on to the visitor mobile services switching centre VMSC2, which takes care of directing the short message to the mobile station 52.

In the second case, the short message service centre SMSC sends the gateway GW only the MAP SendRoutingInfoForSM message and not the actual message part. The course of events as shown by this alternative has been described in figure 6. The solution as described in figure 5 requires big capacity of the gateway.

This solution provides the advantage that the implementation may be made independent of device supplier.

Fig. 6 represents an advantageous signaling example of the function of the system in accordance with the invention. The components of the system are the same as those illustrated in figure 5.

As illustrated in figure 6, the short message arrives in the short message service centre SMSC, arrow 60. The short message service centre sends the gateway GW a MAP SendRoutingInfoForSM message, arrow 61. It is to be noted that the short message service centre does not necessarily send the actual short message to the gateway, instead solely the MAP query. The gateway uses either an internal or external database in order to analyse whether the B subscriber has activated the short message forwarding service. If the service is activated, the gateway sends a routing information query, a SendRoutingInfo message, further on to the home location register HLR, arrow 62. If the short message forwarding service is not active according to the database, the gateway sends a SendRoutingInforForSM message to the home location register HLR, arrow 64. The home location register HLR returns a forwarded-to number to the gateway, if the B subscriber has activated the SMS forwarding, arrow 63. If the SMS forwarding is not activated, the gateway sends a regular roaming number to the gateway, arrow 65. The gateway returns the routing information received from the home location register back to the short message service centre, arrow 66. Based on the routing information received the short message service centre sends the short message further on to the visitor mobile services switching centre VMSC, arrow 67.

The advantage of this solution is that it may be implemented independent of device supplier.

## Claims

1. A method for transmitting a short message in a telecommunication system comprising:
a telecommunication network (1);
a location data register (HLR);
a database (DB) for storing subscriber data;
a gateway (GW) that connects said location data register (HLR) and said database (DB)to said telecommunication network (1);
which method comprises the following steps:
a short message is created;
the short message is sent to the telecommunication network (1);
the short message is directed via the telecommunication network (1) to said gateway (GW);
**characterised in that** the method further comprises the following steps:
the database (DB) comprises data records (2) in which those subscribers are entered who have activated the short message forwarding service;
it is checked from the database (DB) whether the receiver of the short message has activated the short message forwarding service; and if yes, then
a routing information query is made by the gateway (GW) that is addressed to the home location register (HLR); and
the short message is routed based on the data given by the routing information query.

2. A method as defined in claim 1, **characterised in that** the routing information query to be made to the home location register (HLR) is a SendRoutingInfo message.

3. A method as defined in claim 1 or 2, **characterised in that** the short message is sent normally further to the original receiver of the short message, if the forwarding service is not activated according to the database (DB).

4. A system for transmitting a short message in a telecommunication system comprising:
a telecommunication network(1);
a location data register (HLR);
a database (DB) for storing the subscriber data;
a gateway (GW) that connects said location data register (HLR) and said database (DB) to said telecommunication network (1);
which system makes it possible to create and receive short messages and transmit short messages by means of the telecommunication network (1) and the gateway (GW);
**characterised in that** the system comprises:
data records (2) comprised in the database (DB) in which those subscribers are entered who have activated the short message forwarding service;
a checker (3) for checking the activity data of the short message forwarding service from the database (DB)
a query maker (4) for making the routing information query to the home location register (HLR); and
a transmitter (5) for routing the short message based on the data given by the routing information query.

5. A system as defined in claim 4, **characterised in that** the database (DB) is an internal database of the gateway (GW).

6. A system as defined in claim 4, **characterised in that** the database (DB) is an external database attached to the gateway (GW).

7. A system as defined in any one of the preceding claims 4 - 6, **characterised in that** the database (DB) is a location data register (HLR) or an external or internal database attached to the location data register (HLR).

8. A system as defined in any one of the preceding claims 4 - 7, **characterised in that** the telecommunication network is a public land mobile network.

9. A system as defined in any one of the preceding claims 4 - 8, **characterised in that** the location data register (HLR) is the home location register of the public land mobile network.

10. A system as defined in any one of the preceding claims 4 - 9, **characterised in that** the gateway (GW) is the short message service centre of the public land mobile network.

## Patentansprüche

1. Verfahren zum Übertragen einer Kurzmitteilung in einem Telekommunikationssystem, welches aufweist:
ein Telekommunikationsnetz (1);
ein Ortsdatenregister (HLR);
eine Datenbank (DB) zum Speichern von Teilnehmerdaten;
ein Gateway (GW), welches das Ortsdatenregister (HLR) und
die Datenbank (DB) an das Telekommunikationsnetz (1) anschließt;
wobei das Verfahren die folgenden Schritte aufweist:
es wird eine Kurznachricht geschaffen;
die Kurznachricht wird an das Telekommunikationsnetz (1) gesendet;
die Kurznachricht wird über das Telekommunikationsnetz (1) an das Gateway (GW) geführt;
**dadurch gekennzeichnet, dass** das Verfahren ferner die folgenden Schritte aufweist:
die Datenbank (DB) weist Datenaufzeichnungen (2) auf, in welche jene Teilnehmer eingegeben sind, welche den Kurzmitteilungs-Weiterleitungsdienst aktiviert haben;
es wird von der Datenbank (DB) geprüft, ob der Empfänger der Kurznachricht den Kurznachrichten-Weiterleitungsdienst aktiviert hat; und falls dies der Fall ist, dann wird eine Routing-Informationsabfrage durch das Gateway (GW) durchgeführt, welche an das Heimatregister (HLR) adressiert ist; und
die Kurznachricht wird basierend auf den Daten, welche durch die Routing-Informationsabfrage gegeben sind, geroutet.

2. Verfahren nach Anspruch 1, **dadurch gekennzeichnet, dass** die Routing-Informationsabfrage, welche an das Heimatregister zu richten ist, eine SendRoutingInfo- bzw. Sende-Routing-Informationsnachricht ist.

3. Verfahren nach Anspruch 1 oder 2, **dadurch gekennzeichnet, dass** die Kurznachricht normalerweise außerdem an den ursprünglichen Empfänger der Kurznachricht gesendet wird, falls der Weiterleitungsdienst nicht entsprechend der Datenbank (DB) aktiviert ist.

4. System zum Übertragen einer Kurznachricht in einem Telekommunikationssystem, welches aufweist:
ein Telekommunikationsnetz (1);
ein Ortsdatenregister (HLR);
eine Datenbank (DB) zum Speichern der Teilnehmerdaten;
ein Gateway (GW), welches das Ortsdatenregister (HLR) und
die Datenbank (DB) an das Telekommunikationsnetz (1) anschließt;
wobei das System es ermöglicht, Kurznachrichten zu erstellen und zu empfangen und Kurznachrichten mit Hilfe des Telekommunikationsnetzes (1) und des Gateways (GW) zu senden;
**dadurch gekennzeichnet, dass** das System aufweist:
Datenaufzeichnungen (2), welche in der Datenbank (DB) enthalten sind, in welcher jene Teilnehmer eingegeben sind, welche den Kurznachricht-Weiterleitungsdienst aktiviert haben;
ein Prüfglied (3) zum Prüfen der Aktivitätsdaten des Kurznachrichten-Weiterleitungsdienstes von der Datenbank (DB); ein Abfrageerstellungsglied (4) zum Erstellen der Routing-Informationsabfrage an das Heimatregister (HLR); und
einen Sender (5) zum Routen der Kurznachricht, basierend auf den Daten, welche durch die Routing-Informationsabfrage gegeben sind.

5. System nach Anspruch 4, **dadurch gekennzeichnet, dass** die Datenbank (DB) eine interne Datenbank des Gateways (GW) ist.

6. System nach Anspruch 4, **dadurch gekennzeichnet, dass** die Datenbank (DB) eine externe Datenbank ist, welche an dem Gateway (GW) angebracht ist.

7. System nach einem der vorausgehenden Ansprüche 4-6, **dadurch gekennzeichnet, dass** die Datenbank (DB) ein Ortsdatenregister (HLR) oder eine externe oder interne Datenbank ist, welche an dem Ortsdatenregister (HLR) angebracht ist.

8. System nach einem der vorausgehenden Ansprüche 4-7, **dadurch gekennzeichnet, dass** das Telekommunikationsnetz ein öffentliches Land-Mobilnetz ist.

9. System nach einem der vorausgehenden Ansprüche 4-8, **dadurch gekennzeichnet, dass** das Ortsdatenregister (HLR) das Heimatregister des öffentlichen Land-Mobilnetzes ist.

10. System nach einem der vorausgehenden Ansprüche 4-9, **dadurch gekennzeichnet, dass** das Gateway (GW) das Kurznachrichten-Dienstzentrum des öffentlichen Land-Mobilnetzes ist.

## Revendications

1. Procédé pour transmettre un message court dans un système de télécommunication, comportant :
un réseau de télécommunication (1) ;
un enregistreur de données de localisation (HLR) ;
une base de données (DB) pour stocker des données d'abonnés ;
une passerelle (DB) qui connecte ledit enregistreur de données de localisation (HLR) et ladite base de données (DB) audit réseau de télécommunication (1) ;
lequel procédé comporte les étapes suivantes dans lesquelles :
un message court est créé ;
le message court est envoyé au réseau de télécommunication (1) ;
le message court est acheminé via le réseau de télécommunication (1) à ladite passerelle (GW) ;
**caractérisé en ce que** le procédé comporte en outre les étapes suivantes dans lesquelles :
la base de données (DB) comporte des enregistrements de données (2) dans lesquels les abonnés qui ont activé le service d'acheminement de messages courts sont entrés ;
il est vérifié, à partir de la base de données (DB), si le destinataire du message court a activé le service d'acheminement de messages courts ; et le cas échéant, ensuite
une requête d'informations de routage est exécutée par la passerelle (GW), laquelle requête est adressée à l'enregistreur de données de localisation (HLR) ; et
le message court est acheminé sur la base des données délivrées par la requête d'informations d'acheminement.

2. Procédé selon la revendication 1, **caractérisé en ce que** la requête d'informations d'acheminement à exécuter au niveau de l'enregistreur de données de localisation (HLR) est un message d'envoi d'informations « SendRoutingInfo ».

3. Procédé selon la revendication 1 ou 2, **caractérisé en ce que** le message court est envoyé normalement jusqu'au destinataire initial du message court, lorsque le service d'acheminement n'est pas activé selon la base de données (DB).

4. Système pour transmettre un message court dans un système de télécommunication, comportant :
un réseau de télécommunication (1) ;
un enregistreur de données de localisation (HLR) ;
une base de données (DB) pour stocker les données d'abonnés ;
une passerelle (DB) qui connecte ledit enregistreur de données de localisation (HLR) et ladite base de données (DB) audit réseau de télécommunication (1) ;
lequel système rend possible la création et la réception de messages courts, et la transmission de messages courts au moyen du réseau de télécommunication (1) et de la passerelle (GW) ;
**caractérisé en ce que** le système comporte :
des enregistrements de données (2) inclus dans la base de données (DB) dans lesquels les abonnés qui ont activé le service d'acheminement de messages courts sont entrés ;
un dispositif de vérification (3) pour vérifier les données d'activité du service d'acheminement de messages courts à partir de la base de données (DB) ;
un émetteur de requêtes (4) pour exécuter la requête d'informations de routage à l'enregistreur de données de localisation (HLR) ; et
un émetteur (5) pour acheminer le message court sur la base des données délivrées par la requête d'informations d'acheminement.

5. Système selon la revendication 4, **caractérisé en ce que** la base de données (DB) est une base de données interne de la passerelle (GW).

6. Système selon la revendication 4, **caractérisé en ce que** la base de données (DB) est une base de données externe annexée à la passerelle (GW).

7. Système selon l'une quelconque des revendications précédentes 4 à 6, **caractérisé en ce que** la base de données est un enregistreur de données de localisation (HLR) ou une base de données externe ou interne annexée à l'enregistreur de données de localisation (HLR).

8. Système selon l'une quelconque des revendications précédentes 4 à 7, **caractérisé en ce que** le réseau de télécommunication est un réseau mobile terrestre public.

9. Système selon l'une quelconque des revendications précédentes 4 à 8, **caractérisé en ce que** l'enregistreur de données de localisation (HLR) est l'enregistreur de localisation nominal du réseau mobile terrestre public.

10. Système selon l'une quelconque des revendications précédentes 4 à 9, **caractérisé en ce que** la passerelle (GW) est le centre de service de messages courts du réseau mobile terrestre public.
